(19) Europäisches Patentamt
European Patent Office
Office européen des brevets

(11) EP 4 148 828 A1

(12) EUROPEAN PATENT APPLICATION

(43) Date of publication:
**15.03.2023 Bulletin 2023/11**

(21) Application number: **22193748.5**

(22) Date of filing: **02.09.2022**

(51) International Patent Classification (IPC):
***H01M 4/36*** *(2006.01)* ***H01M 4/48*** *(2006.01)*
***H01M 4/587*** *(2010.01)* ***H01M 10/0525*** *(2010.01)*
***H01M 10/0567*** *(2010.01)* ***H01M 10/42*** *(2006.01)*
*H01M 4/525* *(2010.01)*

(52) Cooperative Patent Classification (CPC):
**H01M 10/0525; H01M 4/364; H01M 4/483; H01M 4/587; H01M 10/0567; H01M 10/4235;**
H01M 4/525; H01M 2300/0025

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.09.2021 KR 20210119981**

(71) Applicant: **SK On Co., Ltd.**
**Seoul 03161 (KR)**

(72) Inventors:
- **KIM, Moon Sung**
  **34124 Daejeon (KR)**
- **CHO, In Haeng**
  **34124 Daejeon (KR)**
- **KIM, Hyo Mi**
  **34124 Daejeon (KR)**
- **RYU, Sang Baek**
  **34124 Daejeon (KR)**
- **YOOK, Seung Hyun**
  **34124 Daejeon (KR)**
- **HAN, Jun Hee**
  **34124 Daejeon (KR)**

(74) Representative: **Stolmár & Partner Patentanwälte PartG mbB**
**Blumenstraße 17**
**80331 München (DE)**

(54) **LITHIUM SECONDARY BATTERY**

(57) Provided is a lithium secondary battery including: a positive electrode including a positive electrode active material, a negative electrode including a negative electrode active material, a separator interposed between a positive electrode and the negative electrode, and an electrolyte solution, wherein the negative electrode active material includes a silicon-based oxide; and the electrolyte solution includes a lithium salt, a fluorine-substituted cyclic carbonate compound, a non-aqueous organic solvent, and a difluorophosphite compound.

EP 4 148 828 A1

## Description

### CROSS-REFERENCE TO RELATED APPLICATIONS

This application claims priority under 35 U.S.C. §119 to Korean Patent Application No. 10-2021-0119981, filed on September 8, 2021, in the Korean Intellectual Property Office, the disclosure of which is incorporated herein by reference in its entirety.

### TECHNICAL FIELD

The following disclosure relates to a lithium secondary battery.

### BACKGROUND

In recent years, as an industrial environment changes in the direction of pursuing eco-friendly energy, a study of a new energy source has been intensively conducted. In particular, a study of a lithium secondary battery which has a high energy density, exhibits high performance, and also allows stable electric power supply as a main power source or an auxiliary power source of an electric vehicle or a hybrid vehicle, has been actively conducted.

Therefore, in order to improve an energy density of a lithium secondary battery, a high-voltage lithium secondary battery which is charged with a voltage of 4.2 V or more has been developed.

As a negative electrode active material of a lithium secondary battery, carbon-based, silicon-based, tin-based, transition metal oxides, and the like are being mainly studied and developed, but the capacity, the initial charge/discharge efficiency, the expansion rate, and life characteristics of a negative electrode which has been developed so far have not reached a satisfactory level yet, and thus, various studies therefor are being conducted.

Due to its high theoretical capacity, Group 4 semiconductor materials such as Si, Ge, and Sn attract attention as a new negative electrode material, and in particular, silicon has high capacity performance having a theoretical capacity of up to 4,200 mAh/g, thereby receiving great attention as a next-generation material to replace a carbon-based negative electrode material.

However, a negative electrode employing a negative electrode active material including silicon particles has a large side reaction with an electrolyte solution at a high voltage and is deteriorated due to a large volume change of silicon particles during charge and discharge, so that the life characteristics are degraded.

Meanwhile, when a conventional electrolyte solution additive is used as it is in a high-voltage lithium secondary battery, the internal resistance and the life of a battery are rapidly reduced in the case of increasing an operation voltage range.

That is, when a conventional general electrolyte solution is used, the battery characteristics are good at a voltage of 4.2 V or lower, but at 4.2 V or higher, the battery performance is deteriorated as the voltage rises.

Therefore, development of an electrolyte solution additive which may withstand a high voltage, an electrolyte solution which may suppress an increase in battery internal resistance, and an active material is needed.

### SUMMARY

An embodiment of the present disclosure may be realized by providing a lithium secondary battery which has improved life characteristics, high temperature stability, and low temperature characteristics without degradation of capacity even at a high voltage.

In one general aspect, a lithium secondary battery having improved charge and discharge characteristics, high temperature stability, and low temperature characteristics includes:

a positive electrode including a positive electrode active material,
a negative electrode including a negative electrode active material,
a separator interposed between the positive electrode and the negative electrode, and
an electrolyte solution,
wherein the negative electrode active material includes a silicon-based oxide; and
the electrolyte solution includes a lithium salt, a fluorine-substituted cyclic carbonate compound, and a non-aqueous organic solvent, and a difluorophosphite compound represented by the following Chemical Formula 1:

[Chemical Formula 1]

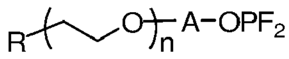

wherein
A is C1-C10 alkylene, haloC1-C10 alkylene, or C3-C10 cycloalkylene;
R is hydrogen, fluoro, cyano, C1-C10 alkyl, or haloC1-C10 alkyl; and
n is an integer of 0 to 5.

Specifically, the negative electrode active material according to an exemplary embodiment of the present disclosure may further include graphite, and the silicon-based oxide and the graphite may be included at a weight ratio of 1:9 to 3:7.

Specifically, in Chemical Formula 1 according to an exemplary embodiment of the present disclosure, A may be C2-C10 alkylene, haloC2-C10 alkylene, or C3-C8 cycloalkylene; R may be hydrogen, cyano, C1-C5 alkyl, or haloC1-C5 alkyl; and n may be an integer of 0 to 3.

The difluorophosphite compound of Chemical Formula 1 according to an exemplary embodiment of the present disclosure may be represented by the following Chemical formula 2:

[Chemical Formula 2] $R_1$-$OPF_2$

wherein
$R_1$ is C3-C8 alkyl.

Specifically, the difluorophosphite compound of the present disclosure may be included at 0.1 to 5 wt% with respect to the total weight of the electrolyte solution.

Specifically, the fluorine-substituted cyclic carbonate compound according to an exemplary embodiment of the present disclosure may be represented by the following Chemical Formula 3:

[Chemical Formula 3]

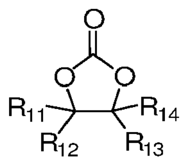

wherein

$R_{11}$ is fluoro or fluoroC1-C4 alkyl;
$R_{12}$ to $R_{14}$ are independently of one another hydrogen, fluoro, C1-C4 alkyl, haloC1-C4 alkyl, or C2-C4 alkenyl.

Specifically, in Chemical Formula 3, $R_{11}$ may be fluoro; and $R_{12}$ to $R_{14}$ may be independently of one another hydrogen, fluoro, or C1-C4 alkyl.

The fluorine-substituted cyclic carbonate compound according to an exemplary embodiment of the present disclosure may be included at 0.1 to 10 wt% with respect to the total weight of the electrolyte solution.

Specifically, the positive electrode active material according to an exemplary embodiment of the present disclosure may include $Li_{x1}(Ni_{a1}Co_{b1}Mn_{c1})O_2$ ($0.5<x1<1.3$, $0<a1<1$, $0<b1<1$, $0<c1<1$, $a1+b1+c1=1$), $Li_{x2}(Ni_{a2}Co_{b2}Mn_{c2})O_4$ ($0.5<x2<1.3$, $0<a2<2$, $0<b2<2$, $0<c2<2$, $a2+b2+c2=2$), or a mixture thereof, and more specifically, may be $Li_{x1}(Ni_{a1}Co_{b1}Mn_{c1})O_2$ wherein $0.95\leq x1\leq 1.10$, $0.5\leq a1<0.99$, and $a1+b1+c1=1$. Specifically, the silicon-based compound according to an exemplary embodiment of the present disclosure may be represented by $SiO_x$, wherein x is a real number satisfying $0<x\leq 2$.

## DETAILED DESCRIPTION OF EMBODIMENTS

Hereinafter, the present disclosure will be described in more detail. Technical terms and scientific terms used in the present specification have the general meaning understood by those skilled in the art to which the present invention

pertains unless otherwise defined, and a description for the known function and configuration obscuring the present disclosure will be omitted in the following description.

"Alkyl" described in the present disclosure refers to an aliphatic hydrocarbon group having 1 to 10, specifically 2 to 10, specifically 3 to 10, specifically 2 to 8, and more specifically 2 to 6 carbon atoms. In the case of being used alone or in combination, the alkyl may be linear or branched alkyl, respectively. The linear or branched alkyl may include specifically, methyl, ethyl, normal propyl, isopropyl, normal butyl, isobutyl, tert-butyl, normal pentyl, neo-pentyl, normal hexyl, isohexyl, normal heptyl, normal octyl, normal decyl, and the like.

"Fluoro-substituted cyclic carbonate" described in the present disclosure refers to a cyclic carbonate having one or more hydrogens replaced with fluoro, and as an example, may be fluoroethylene carbonate, fluoropropylene carbonate, and the like.

The terms "halogen" and "halo" used in the present specification refer to fluorine, chlorine, bromine, or iodine.

The term "haloalkyl" used in the present specification refers to alkyl having one or more hydrogen atoms replaced with a halogen atom. For example, the haloalkyl includes $-CF_3$, $-CHF_2$, $-CH_2F$, $-CBr_3$, $-CHBr_2$, $-CH_2Br$, $-CCl_3$, $-CHCl_2$, $-CH_2Cl$, $-CI_3$, $-CHI_2$, $-CH_2I$, $-CH_2-CF_3$, $-CH_2-CHF_2$, $-CH_2-CH_2F$, $-CH_2-CBr_3$, $-CH_2-CHBr_2$, $-CH_2-CH_2Br$, $-CH_2-CCl_3$, $-CH_2-CHCl_2$, $-CH_2-CH_2Cl$, $-CH_2-CI_3$, $-CH_2-CHI_2$, $-CH_2-CH_2I$, and the like. The haloalkyl used in the present specification may be specifically fluoroalkyl, and the fluoroalkyl refers to alkyl having one or more hydrogen atoms replaced with a halogen atom. Herein, alkyl and halogen are as defined above.

The term "alkylene" used in the present specification refers to a straight-chain or branched divalent hydrocarbon which is composed of only a single bond of carbon and hydrogen, in which the remaining part is connected to a radical ring.

The term "alkenyl" used in the present specification refers to an unsaturated hydrocarbon group which has at least one double bond and 2 to 10, specifically 2 to 8, more specifically 2 to 5, and still more specifically 2 to 4 carbon atoms, and is attached to the remaining portion of a molecule by a single bond.

"Discharge" described in the present specification refers to a process in which lithium ions are desorbed from a negative electrode, and "charge" refers to a process in which lithium ions are inserted into a negative electrode.

The present disclosure provides a lithium secondary battery having improved high temperature storage stability characteristics, stability characteristics, and life characteristics, and the lithium secondary battery of the present disclosure includes:

a positive electrode including a positive electrode active material,
a negative electrode including a negative electrode active material,
a separator interposed between the positive electrode and the negative electrode, and
an electrolyte solution,
wherein the negative electrode active material includes a silicon-based oxide; and
the electrolyte solution includes a lithium salt, a fluorine-substituted cyclic carbonate compound, and a non-aqueous organic solvent, and a difluorophosphite compound represented by the following Chemical Formula 1:

[Chemical Formula 1]

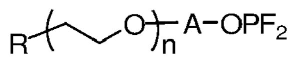

wherein
A is C1-C10 alkylene, haloC1-C10 alkylene, or C3-C10 cycloalkylene;
R is hydrogen, fluoro, cyano, C1-C10 alkyl, or haloC1-C10 alkyl; and
n is an integer of 0 to 5.

It is shown that the lithium secondary battery of the present disclosure employs a combination of a negative electrode employing a negative electrode active material including a silicon-based oxide and an electrolyte solution including a difluorophosphite compound of Chemical Formula 1 and a fluorine-substituted cyclic carbonate compound, thereby having more improved charge and discharge characteristics, excellent high temperature stability, and significantly improved low temperature characteristics.

Specifically, the difluorophosphite compound of Chemical Formula 1 of the present disclosure lowers the resistance of a battery under a high voltage and also is decomposed in a negative electrode to more efficiently form an SEI coat, and is included in combination with a fluorine-substituted cyclic carbonate compound, and thus, a lithium secondary battery employing the compound has significantly improved high temperature storage characteristics, high temperature stability, low temperature characteristics, and life characteristics.

The silicon-based oxide according to an exemplary embodiment of the present disclosure is a material including

a silicon atom and an oxygen atom, and has a chemical formula of $SiO_x$ wherein x is a real number satisfying $0<x\leq2$, and specifically x may satisfy $0.5\leq x\leq1.5$. More specifically, x may satisfy $0.8\leq x\leq1.2$, the silicon-based oxide may be formed by a silicon simple substance Si present in $SiO_2$, which is uniformly dispersed in $SiO_2$.

The silicon-based oxide according to an exemplary embodiment of the present disclosure may have an average particle diameter of 1 μm to 50 μm, specifically 1 μm to 30 μm, and more specifically 3 μm to 20 μm, but is not limited thereto.

The silicon-based oxide according to an exemplary embodiment of the present disclosure may be one or a mixture of two or more selected from $SiO_x$ (x is a real number satisfying $0<x\leq2$).

More specifically, the negative electrode active material according to an exemplary embodiment of the present disclosure may further include graphite.

Specifically, the negative electrode active material according to an exemplary embodiment of the present disclosure may include the silicon-based oxide and graphite at a weight ratio of 1:9 to 3:7, and more specifically at a weight ratio of 1:9 to 2:8. When the content ratio of the silicon-based oxide and the graphite is as described above, charge and discharge characteristics may be more improved.

In Chemical Formula 1 according to an exemplary embodiment of the present disclosure, A may be C2-C10 alkylene, haloC2-C10 alkylene, or C3-C8 cycloalkylene; R may be hydrogen, cyano, C1-C5 alkyl, or haloC1-C5 alkyl; and n may be an integer of 0 to 3, specifically A may be C2-C10 alkylene or C2-C8 cycloalkylene; R may be hydrogen, cyano, or C1-C5 alkyl; and n may be an integer of 0 to 2, and more specifically, A may be C2-C8 alkylene or C3-C8 cycloalkylene; R may be hydrogen or cyano; and n may be an integer of 0 to 2.

Specifically, the difluorophosphite compound of Chemical Formula 1 according to an exemplary embodiment of the present disclosure may be represented by the following Chemical formula 2:

[Chemical Formula 2] **$R_1$-$OPF_2$**

wherein

$R_1$ is C3-C8 alkyl.

Specifically, in Chemical Formula 2 according to an exemplary embodiment of the present disclosure, $R_1$ may be C3-C6 alkyl.

Specifically, the difluorophosphite compound according to an exemplary embodiment of the present disclosure may be selected from the following the structures, but is not limited thereto:

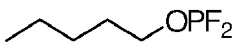
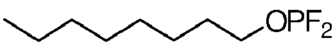

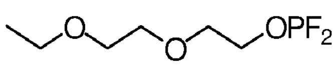
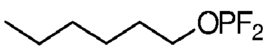

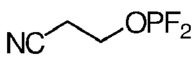
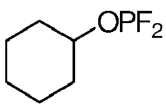

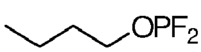
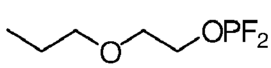

Specifically, the difluorophosphite compound according to an exemplary embodiment of the present disclosure may be

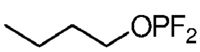

or

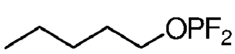 .

The difluorophosphite compound according to an exemplary embodiment of the present disclosure may be

included at 0.1 to 5 wt%, specifically 0.5 to 5 wt% with respect to the total weight of the electrolyte solution.

The fluorine-substituted cyclic carbonate compound according to an exemplary embodiment of the present disclosure may be represented by the following Chemical Formula 3:

[Chemical Formula 3]

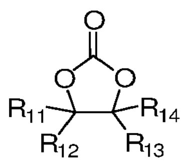

wherein

$R_{11}$ is fluoro or fluoroC1-C4 alkyl; and
$R_{12}$ to $R_{14}$ are independently of one another hydrogen, fluoro, C1-C4 alkyl, haloC1-C4 alkyl, or C2-C4 alkenyl.

The electrolyte solution employed in the lithium secondary battery of the present disclosure includes a combination of the difluorophosphite compound represented by Chemical Formula 1 and a fluorine-substituted cyclic carbonate compound, thereby improving high temperature stability and capacity retention rate even at a high voltage and preventing reduced lifetime due to occurrence of rapid deterioration and the like.

In Chemical Formula 3 according to an exemplary embodiment of the present disclosure, $R_{11}$ may be fluoro; and $R_{12}$ to $R_{14}$ may be independently of one another hydrogen, fluoro, or C1-C4 alkyl, and as a specific example, the compound may be fluoroethylene carbonate (FEC), difluoroethylene carbonate (DFEC), fluorodimethyl carbonate (FDMC), fluoroethylmethyl carbonate (FEMC), or a combination thereof.

The fluorine-substituted cyclic carbonate compound according to an exemplary embodiment of the present disclosure may be included at 0.1 to 10 wt%, specifically 1 to 10 wt%, and more specifically 1 to 5 wt% with respect to the total weight of the electrolyte solution.

The electrolyte solution employed in the lithium secondary battery according to an exemplary embodiment of the present disclosure may further include one or two or more additives selected from the group consisting of oxalatoborate-based compound, oxalatophosphate-based compound, vinylidene carbonate-based compounds, and sulfinyl group-containing compounds, as an additional additive for improving battery characteristics.

The oxalatoborate-based compound may be a compound represented by the following Chemical Formula A or lithium bis(oxalato)borate ($LiB(C_2O_4)_2$, LiBOB) :

[Chemical Formula A]

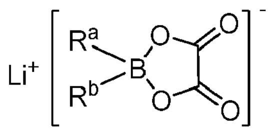

wherein $R^a$ and $R^b$ are independently of each other a halogen or haloC1-C10 alkyl.

A specific example of the oxalatoborate-based compound may include lithium difluoro(oxalato)borate ($LiB(C_2O_4)F_2$, LiDFOB), lithium bis(oxalato)borate ($LiB(C_2O_4)_2$, LiBOB), and the like.

The oxalatophosphate-based compound may be a compound represented by the following Chemical Formula B or lithium difluoro bis(oxalato)phosphate ($LiPF_2(C_2O_4)_2$, LiDFBOP):

[Chemical Formula B]

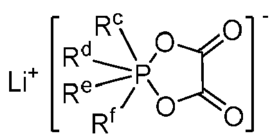

wherein $R^c$ to $R^f$ are independently of one another a halogen or haloC1-C10 alkyl.

A specific example of the oxalatophosphate-based compound may include lithium tetrafluoro(oxalato)phosphate ($LiPF_4(C_2O_4)$, LiTFOP), lithium difluorobis(oxalato)phosphate ($LiPF_2(C_2O_4)_2$, LiDFBOP), and the like.

The vinylidene carbonate-based compound may be vinylene carbonate (VC), vinylethylene carbonate (VEC), or a mixture thereof.

The sulfinyl group (S=O)-containing compound may be a sulfone compound, a sulfite compound, a sulfonate compound, a sultone compound, or a sulfate compound, and these may be used alone or in combination.

The sulfone compound may be specifically a sulfone compound of the following Chemical Formula C:

[Chemical Formula C]

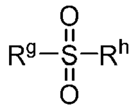

wherein

$R^g$ and $R^h$ are independently of each other hydrogen, a halogen, C1-C10 alkyl, C2-C10 alkenyl, haloC1-C10 alkyl, haloC2-C10 alkenyl, or C6-C12 aryl.

A non-limiting example of the sulfone compound may include dimethylsulfone, diethylsulfone, ethyl methyl sulfone, methyl vinyl sulfone, divinyl sulfone, or the like, but is not limited thereto. In addition, these compounds may be used alone or in combination of two or more.

The sulfite compound may be specifically a sulfite compound of the following Chemical Formula D:

[Chemical Formula D]

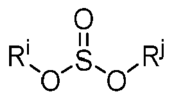

wherein

$R^i$ and $R^j$ are independently of each other hydrogen, a halogen, C1-C10 alkyl, C2-C10 alkenyl, haloC1-C10 alkyl, haloC2-C10 alkenyl, or C6-C12 aryl, or $R^i$ and $R^j$ may be connected via $-CR^{100}R^{101}CR^{102}R^{103}(CR^{104}R^{105})_m-$ to form a ring;

$R^{100}$ to $R^{105}$ are independently of one another hydrogen, C1-C10 alkyl, or phenyl; and

m is an integer of 0 or 1.

Non-limiting examples of the sulfite compound may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, 1,3-butylene glycol sulfite, or the like, but are not limited thereto. In addition, these compounds may be used alone or in combination of two or more.

The sulfonate compound may be specifically a sulfonate compound of the following Chemical Formula E:

[Chemical Formula E]

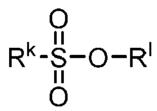

wherein

$R^k$ and $R^l$ are independently of each other hydrogen, a halogen, C1-C10 alkyl, C2-C10 alkenyl, haloC1-C10 alkyl, haloC2-C10 alkenyl, or C6-C12 aryl.

Non-limiting examples of the sulfonate compound may include methyl methansulfonate, ethyl methansulfonate, methyl ethansulfonate, propyl methansulfonate, methyl propansulfonate, ethyl propansulfonate, vinyl methansulfonate, allyl methanesulfonate, vinyl benzenesulfonate, allyl prop-2-enesulfonate, or the like, but are not limited thereto. In

addition, these compounds may be used alone or in combination of two or more.

The sultone compound may be specifically a sultone compound of the following Chemical Formula F:

[Chemical Formula F]

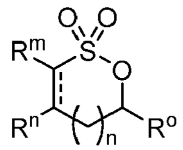

wherein

--- denotes a single bond or a double bond;
$R^m$ to $R^o$ are independently of one another hydrogen, a halogen, C1-C10 alkyl, C2-C10 alkenyl, haloC1-C10 alkyl, haloC2-C10 alkenyl, or C6-C12 aryl; and
n is an integer of 0 to 3.

Non-limiting examples of the sultone compound may include ethane sultone, 1,3-propane sultone (PS), 1,4-butane sultone (BS), ethene sultone, 1,3-propene sultone (PRS), 3-fluoro-1,3-propane sultone (FPS), 1,4-butene sultone, or the like, but are not limited thereto. In addition, these compounds may be used alone or in combination of two or more.

The sulfate compound may be specifically a sulfate compound of the following Chemical Formula G:

[Chemical Formula G]

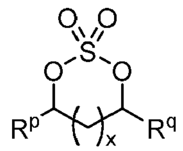

wherein

$R^p$ and $R^q$ are independently of each other hydrogen, a halogen, C1-C10 alkyl, C2-C10 alkenyl, haloC1-C10 alkyl, haloC2-C10 alkenyl, or C6-C12 aryl; and
x is an integer of 0 to 3.

Non-limiting examples of the sulfate compound may include ethylene sulfate (ESA), propylene sulfate, 2,3-butylene sulfate, 1,3-propylene sulfate, 1,3-butylene sulfate, and the like, but are not limited thereto. In addition, these compounds may be used alone or in combination of two or more.

In an exemplary embodiment of the present disclosure, more specifically, the electrolyte solution may further include one or two or more additives selected from the group consisting of oxalatoborate-based compounds and sulfinyl group-containing compounds, more specifically, the electrolyte solution may further include one or two or more additives selected from the group consisting of the compound represented by Chemical Formula A, lithium bis(oxalato)borate ($LiB(C_2O_4)_2$, LiBOB), and the sultone compound represented by Chemical Formula F, and still more specifically, the electrolyte solution may further include a mixture of at least one selected from the group consisting of the compound represented by Chemical Formula A and lithium bis(oxalato)borate ($LiB(C_2O_4)_2$, LiBOB) and the sultone compound represented by Chemical Formula F, as the additive.

In an exemplary embodiment of the present disclosure, more specifically, the electrolyte solution may further include two or more additives selected from the group consisting of lithium difluoro(oxalate)borate ($LiB(C_2O_4)F_2$, LiDFOB), lithium bis(oxalato)borate ($LiB(C_2O_4)_2$, LiBOB), ethane sultone, 1,3-propane sultone (PS), 1,4-butane sultone (BS), ethene sultone, 1,3-propenesultone (PRS), 3-fluoro-1,3-propanesultone (FPS), and 1,4-butenesultone.

Specifically, the electrolyte solution according to an exemplary embodiment of the present disclosure may further include lithium bis(oxalato)borate ($LiB(C_2O_4)_2$, LiBOB) or 1,3-propane sultone (PS), as an additional additive, and more specifically, may include a mixture of lithium bis(oxalato)borate ($LiB(C_2O_4)_2$, LiBOB) and 1,3-propane sultone (PS).

In an exemplary embodiment of the present disclosure, the content of the electrolyte solution is not largely limited, but in order to improve a battery life in the electrolyte solution, the additive may be included at 0.1 to 5.0 wt%,

and more specifically 0.1 to 3.0 wt% with respect to the total weight of the electrolyte solution.

In the electrolyte solution according to an exemplary embodiment of the present disclosure, the non-aqueous organic solvent may include carbonate, ester, ether, or ketone alone or a mixed solvent thereof, and specifically, the non-aqueous organic solvent may be a cyclic carbonate-based solvent or a linear carbonate-based solvent, and more specifically, may be a mixed solvent of a cyclic carbonate-based solvent and a linear carbonate-based solvent. The cyclic carbonate-based solvent has a high polarity, so that it may sufficiently dissociate lithium ions, but has a low ion conductivity due to its high viscosity. Therefore, cyclic carbonate-based solvent may be mixed with a linear carbonate-based solvent having low polarity but low viscosity, thereby optimizing the characteristics of the lithium secondary battery.

The cyclic carbonate-based solvent may be selected from the group consisting of ethylene carbonate, propylene carbonate, butylene carbonate, vinylene carbonate, vinylethylene carbonate, fluoroethylene carbonate and a mixture thereof, and the linear carbonate-based solvent may be selected from the group consisting of dimethyl carbonate, diethyl carbonate, dipropyl carbonate, ethylmethyl carbonate, methylpropyl carbonate, methylisopropyl carbonate, ethylpropyl carbonate and a mixture thereof.

In the electrolyte solution according to an exemplary embodiment of the present disclosure, the non-aqueous organic solvent is a carbonate solvent of a cyclic carbonate-based solvent and a linear carbonate-based solvent, and the linear carbonate-based solvent and the cyclic carbonate-based solvent may be used as a mixture at a mixed volume ratio of 1 to 9:1, specifically 1.5 to 4:1. In the high voltage lithium electrolyte solution according to an exemplary embodiment of the present disclosure, the lithium salt may be, though it is not limited thereto, one or two or more selected from the group consisting of $LiPF_6$, $LiBF_4$, $LiClO_4$, $LiSbF_6$, $LiAsF_6$, $LiN(SO_2C_2F_5)_2$, $LiN(CF_3SO_2)_2$, $LiN(SO_3C_2F)_2$, $LiN(SO_2F)_2$, $LiCF_3SO_3$, $LiC_4F_9SO_3$, $LiC_6H_5SO_3$, LiSCN, $LiAlO_2$, $LiAlCl_4$, $LiN(C_xF_{2x+1}SO_2)(C_yF_{2y+1}SO_2)$ (wherein x and y are natural numbers), LiCl, LiI, and $LiB(C_2O_4)_2$.

A concentration of the lithium salt may be in a range of 0.1 to 2.0 M or in a range of 0.7 to 1.6 M. When the concentration of the lithium salt is less than 0.1 M, the conductivity of the electrolyte solution is lowered, so that the performance of the electrolyte solution is deteriorated, and when the concentration of the lithium salt is more than 2.0 M, the viscosity of the electrolyte solution is increased, so that the mobility of lithium ions is decreased. The lithium salt serves as a source of lithium ions in the battery, thereby allowing operation of a basic lithium secondary battery.

The electrolyte solution according to an exemplary embodiment of the present disclosure includes the difluorophosphite compound and the fluorine-substituted cyclic carbonate compound as a combination, which is a specific additive, whereby it is stable in a temperature range of -20°C to 60°C and maintains stable characteristics even in an area of a voltage of 4.35 V or higher, and thus, may be applied to all kinds of lithium secondary batteries such as a lithium ion battery and a lithium polymer battery.

In particular, the electrolyte solution of the present disclosure is employed as a combination with a negative electrode employing a negative electrode active material including a silicon-based oxide to have more improved electric properties.

The lithium secondary battery of the present disclosure includes a silicon-based negative electrode including a silicon-based oxide, a positive electrode, a separator interposed between the positive electrode and the negative electrode, and an electrolyte solution including the difluorophosphite compound and the fluoro-substituted cyclic carbonate.

Specifically, the negative electrode according to an exemplary embodiment of the present disclosure includes a negative electrode current collector and a negative electrode active material layer formed on the negative electrode current collector, and the negative electrode active material layer includes a negative electrode active material capable of adsorbing and desorbing lithium ions and includes a silicon-based oxide as an essential constituent component of the negative electrode active material.

Specifically, the negative electrode active material of the present disclosure may further include graphite. The lithium secondary battery of the present disclosure employs a combination of a negative electrode including a mixture of the silicon-based oxide and graphite and an electrolyte solution including a specific additive having a structure different from the negative electrode, thereby having surprisingly improved electric properties.

The graphite according to an exemplary embodiment of the present disclosure may be any graphite which may be used as a negative electrode active material, and as an example, may include natural graphite, artificial graphite, graphitized cokes, and the like, but is not limited thereto.

The positive electrode according to an exemplary embodiment of the present disclosure includes a positive electrode active material capable of adsorbing and desorbing lithium ions, and the positive electrode active material according to an exemplary embodiment of the present disclosure may be a nickel-cobalt-manganese active material, as a combination of the negative electrode and the electrolyte solution according to an exemplary embodiment of the present disclosure.

Specifically, the positive electrode active material according to an exemplary embodiment of the present disclosure may be $Li_{x1}(Ni_{a1}Co_{b1}Mn_{c1})O_2$ ($0.5<x1<1.3$, $0<a1<1$, $0<b1<1$, $0<c1<1$, $a1+b1+c1=1$), $Li_{x2}(Ni_{a2}Co_{b2}Mn_{c2})O_4$ ($0.5<x2<1.3$, $0<a2<2$, $0<b2<2$, $0<c2<2$, $a2+b2+c2=2$) or a mixture thereof, and more specifically, may be $Li_{x1}$

$(Ni_{a1}CO_{b1}Mn_{c1})O_2$ wherein 0.95≤x1≤1.10, 0.5≤a1<0.99, and a1+b1+c1=1.

The lithium secondary battery according to an exemplary embodiment of the present disclosure may include an electrolyte solution including the difluorophosphite compound and the fluoro-substituted cyclic carbonate; a negative electrode including a silicon-based oxide; and a positive electrode including a positive electrode active material. Herein, the positive electrode active material may be $Li_{x1}$ $(Ni_{a1}CO_{b1}Mn_{c1})O_2$ wherein 0.95≤x1≤1.10, 0.5≤a1<0.99, and a1+b1+c1=1, and more specifically, $Li(Ni_{a1}CO_{b1}Mn_{c1})O_2$ wherein 0.5≤a1<0.99 and a1+b1+c1=1.

The positive electrode or the negative electrode may be prepared by dispersing an electrode active material, a binder, a conductive material, and if necessary, a thickener in a solvent to prepare an electrode slurry composition, and applying the slurry composition on an electrode current collector. As a positive electrode current collector, aluminum, an aluminum alloy, or the like may be often used, and as a negative electrode current collector, copper, a copper alloy, or the like may be often used. The positive electrode current collector and the negative electrode current collector may be in the form of foil or mesh.

The binder is a material serving as pasting of the active material, mutual adhesion of the active material, adhesion with the current collector, a buffering effect against expansion and shrinkage of the active material, and the like, and the example thereof includes polyvinylidene fluoride (PVdF), a copolymer of polyhexafluoropropylene-polyvinylidene fluoride (PVdF/HFP), poly(vinyl acetate), polyvinyl alcohol, polyethylene oxide, polyvinyl pyrrolidone, alkylated polyethylene oxide, polyvinyl poly(methyl methacrylate), poly(ethyl acrylate), polytetrafluoroethylene, polyvinyl chloride, polyacrylonitrile, polyvinyl pyridine, a styrene butadiene rubber, an acrylonitrile-butadiene rubber, and the like. The content of the binder is 0.1 to 30 wt%, and specifically 1 to 10 wt% with respect to the electrode active material. When the content of the binder is too low, the adhesion strength between the electrode active material and the current collector will be insufficient, and when the content of the binder is too high, the adhesion strength will be better, but the content of the electrode active material will be reduced by the increased amount of the binder, and thus, it is disadvantageous for increasing a battery capacity.

The conductive material, which is used for imparting conductivity to an electrode, may be any material as long as it does not cause any chemical change and is an electron conductive in a battery to be configured, and at least one selected from the group consisting of graphite-based conductive materials, carbon black-based conductive materials, metals, or metal compound-based conductive materials may be used as the conductive material. An example of the graphite-based conductive material includes artificial graphite, natural graphite, or the like, an example of the carbon black-based conductive material includes acetylene black, ketjen black, denka black, thermal black, channel black, or the and an example of the metal-based or metal compound-based conductive material includes a perovskite material such as tin, tin oxide, tin phosphate ($SnPO_4$), titanium oxide, potassium titanate, $LaSrCoO_3$, or $LaSrMnO_3$. However, the conductive material is not limited thereto.

The content of the conductive material may be 0.1 to 10 wt% with respect to the electrode active material. When the content of the conductive material is lower than 0.1 wt%, electrochemical properties are deteriorated, and when the content is higher than 10 wt%, energy density per weight is decreased.

The thickener is not particularly limited as long as it may serve to control the viscosity of an active material slurry, and for example, carboxymethyl cellulose, hydroxylmethyl cellulose, hydroxylethyl cellulose, hydroxypropyl cellulose, or the like may be used.

As the solvent in which the electrode active material, the binder, the conductive material, and the like are dispersed, a non-aqueous solvent or an aqueous solvent is used. The non-aqueous solvent may include N-methyl-2-pyrrolidone (NMP), dimethyl formamide, dimethyl acetamide, N,N-dimethylaminopropylamine, ethylene oxide, tetrahydrofuran, and the like.

The lithium secondary battery according to the present disclosure may include a separator which prevents a short circuit between the positive electrode and the negative electrode and provides an ion channel of lithium ions, and as the separator, a polyolefin-based polymer film such as polypropylene, polyethylene, polyethylene/polypropylene, polyethylene/polypropylene/polyethylene, and polypropylene/polyethylene/polypropylene, or a multiple film, a microporous film, and woven and non-woven fabric thereof may be Further, a film where a resin having excellent stability is coated on a porous polyolefin film may be used.

The lithium secondary battery of the present disclosure may be formed in other shapes such as a cylindrical or pouch shape in addition to a square shape.

Hereinafter, the examples and the comparative examples of the present disclosure will be described. However, the following examples are only an exemplary embodiment of the present disclosure, and the present disclosure is not limited thereto. Assuming that a lithium salt is all dissociated in order for a lithium ion concentration to be 1 mol (1 M), a base electrolyte solution may be formed by dissolving a corresponding amount of the lithium salt such as $LiPF_6$ in a basic solvent so that the concentration is 1 molar concentration (1 M).

The compound used as an electrolyte solution additive of the present invention was prepared as disclosed in Korean Patent Registration No. 10-2094263 and used.

[Example 1]

An electrolyte solution was prepared by dissolving $LiPF_6$ in a mixed solvent in which propylene (EC), ethylmethyl carbonate (EMC), and diethyl carbonate (DEC) were mixed at a volume ratio of 25:45:30 so that the solution was a 1.0 M solution, thereby preparing a base electrolyte solution (1 M $LiPF_6$, EC/EMC/DEC = 25:45:30), and further introducing the components described in the following Table 1 to the base electrolyte solution.
A battery to which the non-aqueous electrolyte was applied was manufactured as follows:
$LiNi_{a1}Co_{b1}Mn_{c1}O_2$ (a1:b1:c1 = 0.88:0.1:0.02) as a positive electrode active material, polyvinylidene fluoride (PVdF) as a binder, and carbon as a conductive material were mixed at a weight ratio of 98:1.2:0.8, and then the mixture was dispersed in N-methyl-2-pyrrolidone to prepare a positive electrode slurry. This slurry was coated on an aluminum foil having a thickness of 12 μm, which was dried and rolled to prepare a positive electrode.
Artificial graphite and a silicon-based oxide ($SiO_x$ wherein x is a real number satisfying $0.8 \leq x \leq 1.2$, average particle diameter of 5 μm) as a negative electrode, a styrene-butadiene rubber as a binder, and carboxymethyl cellulose as a thickener were mixed at a weight ratio of 97:1.2:1.5, and then the mixture was dispersed in water to prepare a negative electrode active material slurry. This slurry was coated on a copper foil having a thickness of 8 μm, which was dried and rolled to prepare a negative electrode.
A film separator made of polyethylene (PE) having a thickness of 13 μm was stacked between the thus-manufactured electrodes to form a cell using a pouch having a size of a thickness of 15 mm × a width of 288 mm × a length of 102 mm, and the non-aqueous electrolyte was injected, thereby manufacturing a 80 Ah grade lithium secondary battery.
The performance of the thus-manufactured 80 Ah grade battery was evaluated for the evaluation items shown below, and the results are shown in Tables 2 and 3.

[Examples 2 to 8 and Comparative Examples 1 to 4]

The battery was manufactured in the same manner as in Example 1, except that the electrolyte solution was prepared by further adding the components shown in Table 1, and the performance of the manufactured battery was evaluated for the evaluation items shown below, and the results are shown in Tables 2 and 3.

[Comparative Example 5]

The battery was manufactured in the same manner as in Example 1, except that only artificial graphite was used instead of artificial graphite and the silicon-based oxide as the negative electrode active material, and the electrolyte solution was configured with the composition shown in Table 2.
Artificial graphite as a negative electrode active material, a styrene butadiene rubber as a binder and carboxymethyl cellulose as a thickener were mixed at a weight ratio of 97:1.2:1.5 and then were dispersed in water to prepare a negative electrode active material slurry. This slurry was coated on a copper foil having a thickness of 8 μm, which was dried and rolled to prepare a negative electrode.
The performance of the thus-manufactured battery was evaluated for the evaluation items shown below, and the results are shown in Tables 2 and 3.

* Evaluation items *

[Evaluation of electrolyte solution storage stability (APHA color measurement)]

APHA color (referred to as Hazen grade), more appropriately Platinum Cobalt (Pt/Co) grade is a color standard method defined by ASTM D1209 in the name of American Public Health Association.
The electrolyte solution of the composition of Table 1 was added to an electrolyte solution storage container (made of SUS) and was sealed and stored in an oven at 60°C, and APHA measurement was performed at week 1 and week 4. PFXi-195 available from Lovibond® was used as measurement equipment.

[Evaluation of high temperature storage]

1. A battery to which the electrolyte solution was injected was charged at 4.2 V, 26.4 A CC-CV for 3 hours, and then was discharged to 2.5 V with a current of 26.4 A to measure an initial capacity.
2. The battery was charged at 4.20 V, 26.4 A CC-CV for 3 hours, and then was allowed to stand at a high temperature in a chamber at 60°C for 4 weeks. Thereafter, the battery was allowed to stand at room temperature for 30 minutes and was discharged to 2.5 V with 26.4 A to obtain a capacity, which was divided by a capacity measured before storage and

calculated as a percentage.

$$\text{Capacity retention rate of battery (\%)} = (\text{final capacity}/\text{initial capacity}) \times 100\ (\%)$$

3. The battery after completing No. 2 was charged at 4.2 V, 26.4 A CC-CV for 3 hours (SOC=100), discharged with a current of 26.4 A, and allowed to stand for 1 hour at a point where SOC was set to 50%, and then a 10 s discharge DC-IR value was measured.

4. Vent point measurement: The battery was charged at 4.20 V, 26.4 A CC-CV for 3 hours, the front and back of the battery were wrapped with a plate jig made of Al and fastened with bolts (module simulation), and the battery was allowed to stand at a high temperature in a chamber at 60°C. A point at which the battery internal pressure was increased due to gas occurrence and the appearance of the battery pouch was damaged was observed.

5. Evaluation of amount of gas stored at high temperature

The battery was charged at 4.20V, 26.4A CC-CV for 3 hours, and then was allowed to stand at a high temperature in a chamber at 60°C for 4 weeks. Thereafter, the battery was allowed to stand at room temperature for 1 hour, and then placed in a chamber where a gas production amount was measured. Vacuum was applied to the chamber and the chamber was filled with nitrogen gas to normal pressure. A nitrogen volume (V0) and a chamber internal pressure (P0) were measured at this time. After vacuum was applied again, the battery was punctured and a chamber internal pressure (P1) was measured.

$$\text{Gas production amount (mL)} = V0/P0 \times P1$$

6. Measurement and evaluation of APHA (Pt-Co=Hazen color scale)The color was measured in accordance with ASTM D1209.

[Table 1]

| | Electrolyte solution composition | APHA (Pt-Co=Hazen color scale) | | |
|---|---|---|---|---|
| | | Week 0 | Week 1 | Week 4 |
| Example 1 | Base electrolyte solution + FEC 5% + PDFP 1 wt% | 5 | 4 | 8 |
| Example 2 | Base electrolyte solution + FEC 5% + ODFP 1 wt% | 5 | 8 | 15 |
| Example 3 | Base electrolyte solution + FEC 5% + EEEDFP 1 wt% | 5 | 7 | 30 |
| Example 4 | Base electrolyte solution + FEC 5% + CEDFP 1 wt% | 5 | 9 | 29 |
| Example 5 | Base electrolyte solution + FEC 5% + CHDFP 1 wt% | 5 | 8 | 31 |
| Example 6 | Base electrolyte solution + FEC 2% + PDFP 1 wt% | 5 | 4 | 9 |
| Example 7 | Base electrolyte solution + FEC 10% + PDFP 1 wt% | 5 | 4 | 10 |
| Example 8 | Base electrolyte solution + FEC 5% + PDFP 2 wt% | 5 | 4 | 6 |
| Comparative Example 1 | Base electrolyte solution + FEC 5% + LiDFP 1 wt% | 5 | 18 | 531 |
| Comparative Example 2 | Base electrolyte solution + FEC 2% | 5 | 21 | 398 |
| Comparative Example 3 | Base electrolyte solution + FEC 5% | 5 | 24 | 551 |
| Comparative Example 4 | Base electrolyte solution + FEC 10% | 5 | 36 | 701 |

PDFP

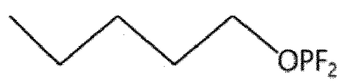

(Example 1)

ODFP

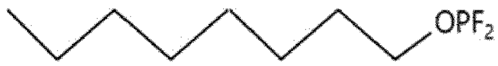

(Example 2)

EEEDFP

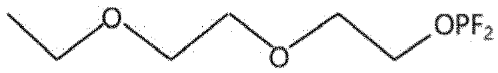

(Example 3)

CEDFP

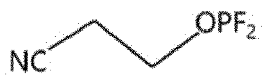

(Example 4)

CHDFP

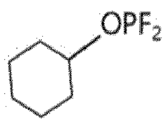

(Example 5)

LiDFP

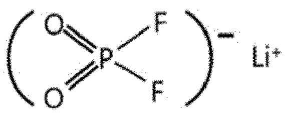

(Comparative Example 1)

The electrolyte solutions of Examples 1 to 5 including the difluorophosphite compound of the present disclosure had an APHA value slightly increased from the initial value, and it is shown that the storage stability of the electrolyte solutions was excellent.

Specifically, the APHA value was not greatly changed depending on the FEC content as in Examples 6 and 7, and when the content of the difluorophosphite compound was increased (2 wt%) as in Example the APHA value was hardly changed from the initial value. The electrolyte solution of Comparative Example 1 having a functional group different from the difluorophosphite compound of the present disclosure and the electrolyte solutions of Comparative Examples 2 to 4 having no difluorophosphite compound of the present disclosure had rapidly increased APHA values in which the higher the FEC content was, the greater the increase was, and thus, it is shown that the storage stability of the electrolyte solutions was significantly deteriorated.

[Table 2]

| | Negative electrode active material | Electrolyte solution composition | Stored at 60°C | | | |
|---|---|---|---|---|---|---|
| | | | After 4 weeks | | | Ventpo int (week) |
| | | | Gas production amount (ml) | Capacity retention rate (%) | Discharge DC-IR (%) | |
| Example 1 | Silicon-based oxide and graphite | Base electrolyte solution+ FEC 5% + PDFP 1 wt% | 128.1 | 75.0 | 115.0 | 14 |
| Example 2 | Silicon-based oxide and graphite | Base electrolyte solution + FEC 5% + ODFP 1 wt% | 140.5 | 65.0 | 124.0 | 12 |
| Example 3 | Silicon-based oxide and graphite | Base electrolyte solution + FEC 5% + EEEDFP 1 wt% | 145.3 | 64.6 | 130.2 | 12 |
| Example 4 | Silicon-based oxide and graphite | Base electrolyte solution + FEC 5% + CEDFP 1 wt% | 147.2 | 62.3 | 133.5 | 11 |
| Example 5 | Silicon-based oxide and graphite | Base electrolyte solution + FEC 5% + CHDFP 1 wt% | 146.5 | 62.4 | 132.4 | 11 |
| Comparative Example 1 | Silicon-based oxide and graphite | Base electrolyte solution + FEC 5% + LiDFP 1 wt% | 206.4 | 43.6 | 152.8 | 8 |
| Comparative Example 2 | Silicon-based oxide and graphite | Base electrolyte solution + FEC 5% | 215.2 | 43.0 | 154.5 | 8 |
| Comparative Example 5 | Graphite-based material alone | Base electrolyte solution + FEC 5% + PDFP 1 wt% | 180.1 | 65.0 | 135.0 | 10 |

It is shown that the batteries of Examples 1 to 5 including the difluorophosphite compound of the present disclosure in the electrolyte solution had a significantly decreased gas production amount and surprisingly improved capacity retention rate and discharge DC-IR, as compared with Comparative Example 2 including no difluorophosphite compound of the present disclosure. The battery vent point was also improved accordingly. In addition, Comparative Example 1 including a compound different from the difluorophosphite compound of the present disclosure also had an insignificant gas production reduction effect. Comparative Example 5 using a graphite-based material alone not a silicon-based material as a negative electrode active material had no change in the capacity retention rate and discharge DC-IR, but had an insignificant gas production reduction effect.

[Table 3]

| | Negative electrode active material | Electrolyte solution composition | Lifetime at 45°C | | |
|---|---|---|---|---|---|
| | | | 400 cycles | | Remarks |
| | | | Gas production amount (ml) | Capacity retention rate (%) | |
| Example 1 | Mixture of two (silicon compound + graphite) | Base electrolyte solution+ FEC 5% + PDFP 1wt% | 48 | 89.2 | 800 cycles no vent |

(continued)

| | Negative electrode active material | Electrolyte solution composition | Lifetime at 45°C | | |
|---|---|---|---|---|---|
| | | | 400 cycles | | Remarks |
| | | | Gas production amount (ml) | Capacity retention rate (%) | |
| Comparative Example 2 | Mixture of two | Base electrolyte solution + FEC 5% | 150.5 | 90.1 | 800 cycles lifetime plunge (capacity retention rate of 60% or less) |
| Comparative Example 5 | Graphite-based material alone | Base electrolyte solution + FEC 5% + PDFP 1wt% | 301 | 91.2 | 530cycle vent |

The battery of Example 1 including the difluorophosphite compound of the present disclosure had almost the same capacity retention rate as that of the battery of Comparative Example 2 including no difluorophosphite compound of the present disclosure, but had a significantly decreased gas production amount, and thus, it is shown that the high temperature stability of the battery including the difluorophosphite compound of the present disclosure was surprisingly improved. In addition, the battery of Comparative Example 2 showed lifetime plunge after 800 cycles, and thus, it is shown that its long-term safety is very poor.

Comparative Example 5 including the difluorophosphite compound of the present disclosure but using the graphite-based material not the silicon-based material as the negative electrode active material had almost the same capacity retention rate as that of Example 1 of the present disclosure, but as the gas production amount was rapidly increased, a battery vent occurred at $530^{th}$ cycle, and thus, it is shown that its high temperature life is poor.

Therefore, the lithium secondary battery of the present disclosure employing a combination of the electrolyte solution including the difluorophosphite compound and the fluorine-substituted cyclic carbonate compound as an essential additive and the negative electrode employing the negative electrode active material including the silicon-based compound allows implement of surprisingly improved capacity retention rate, high temperature stability, storage stability, and life characteristics.

The lithium secondary battery of the present disclosure employs a combination of an electrolyte solution including a specific additive and a negative electrode including a specific negative electrode active material, thereby having improved life characteristics without output degradation even at a high voltage and also having excellent low temperature characteristics.

In addition, the lithium secondary battery of the present disclosure employs a combination of specific additives, thereby having excellent high temperature storage stability as well as an excellent capacity recovery rate at a high temperature.

## Claims

**1.** A lithium secondary battery comprising:

a positive electrode comprising a positive electrode active material,
a negative electrode comprising a negative electrode active material,
a separator interposed between the positive electrode and the negative electrode, and
an electrolyte solution,
wherein the negative electrode active material comprises a silicon-based oxide; and
the electrolyte solution comprises a lithium salt, a fluorine-substituted cyclic carbonate compound, a non-aqueous organic solvent, and a difluorophosphite compound represented by the following Chemical Formula 1:

[Chemical Formula 1]

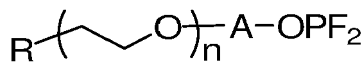

wherein
A is C1-C10 alkylene, haloC1-C10 alkylene, or C3-C10 cycloalkylene;
R is hydrogen, fluoro, cyano, C1-C10 alkyl, or haloC1-C10 alkyl; and
n is an integer of 0 to 5.

**2.** The lithium secondary battery of claim 1, wherein the negative electrode active material further comprises graphite.

**3.** The lithium secondary battery of claim 2, wherein the silicon-based oxide and the graphite are included at a weight ratio of 1:9 to 3:7.

**4.** The lithium secondary battery of claim 1, wherein

in Chemical Formula 1, A is C2-C10 alkylene, haloC2-C10 alkylene, or C3-C8 cycloalkylene;
R is hydrogen, cyano, C1-C5 alkyl, or halo C1-C5 alkyl; and
n is an integer of 0 to 3.

**5.** The lithium secondary battery of claim 1, wherein the difluorophosphite compound of Chemical Formula 1 is represented by the following Chemical Formula 2:

[Chemical Formula 2]

$$R_1—OPF_2$$

wherein
$R_1$ is C3-C8 alkyl.

**6.** The lithium secondary battery of claim 1, wherein the difluorophosphite compound is included at 0.1 to 5 wt% with respect to a total weight of the electrolyte solution.

**7.** The lithium secondary battery of claim 1, wherein the fluorine-substituted cyclic carbonate compound is represented by the following Chemical Formula 3:

[Chemical Formula 3]

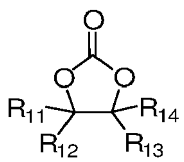

wherein

$R_{11}$ is fluoro or fluoroC1-C4 alkyl; and
$R_{12}$ to $R_{14}$ are independently of one another hydrogen, fluoro, C1-C4 alkyl, haloC1-C4 alkyl, or C2-C4 alkenyl.

**8.** The lithium secondary battery of claim 7, wherein in Chemical Formula 3, $R_{11}$ is fluoro; and $R_{12}$ to $R_{14}$ are independently of one another hydrogen, fluoro, or C1-C4 alkyl.

**9.** The lithium secondary battery of claim 7, wherein the fluorine-substituted cyclic carbonate compound is included at 0.1 to 10 wt% with respect to the total weight of the electrolyte solution.

**10.** The lithium secondary battery of claim 1, wherein the positive electrode active material comprises $Li_{x1}Ni_{a1}Co_{b1}Mn_{c1})O_2$ ($0.5<x1<1.3$, $0<a1<1$, $0<b1<1$, $0<c1<1$, $a1+b1+c1=1$), $Li_{x2}(Ni_{a2}Co_{b2}Mn_{c2})O_4$ ($0.5<x2<1.3$, $0<a2<2$, $0<b2<2$, $0<c2<2$, $a2+b2+c2=2$), or a mixture thereof.

11. The lithium secondary battery of claim 10, wherein the positive electrode active material is $Li_{x1}(Ni_{a1}CO_{b1}Mn_{c1})O_2$ wherein $0.95 \leq x1 \leq 1.10$, $0.5 \leq a1 \leq 0.99$, and $a1+b1+c1=1$.

12. The lithium secondary battery of claim 1, wherein the silicon-based oxide is represented by $SiO_x$ wherein x is a real number satisfying $0<x \leq 2$.

Europäisches Patentamt
European Patent Office
Office européen des brevets

# EUROPEAN SEARCH REPORT

Application Number
EP 22 19 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2020/251778 A1 (SAMSUNG SDI CO., LTD.) 6 August 2020 (2020-08-06)<br>* paragraph [0009] - paragraph [0023] *<br>* paragraph [0038] - paragraph [0050] *<br>* paragraph [0060] - paragraph [0061] *<br>* paragraph [0066] *<br>* paragraph [0073] - paragraph [0075] *<br>* paragraph [0083] - paragraph [0087] *<br>* preparation examples 7 & 8; examples 2, 3 *<br>* claims 1-7, 10-13 *<br>----- | 1,4,6-8, 10,12<br><br>2,3,5,9, 11 | INV.<br>H01M4/36<br>H01M4/48<br>H01M4/587<br>H01M10/0525<br>H01M10/0567<br>H01M10/42<br><br>ADD.<br>H01M4/525 |
| Y<br><br>A | US 2020/052337 A1 (SAMSUNG SDI CO., LTD.) 13 February 2020 (2020-02-13)<br>* paragraph [0007] - paragraph [0010] *<br>* paragraph [0024] - paragraph [0029] *<br>* paragraph [0038] - paragraph [0040] *<br>* paragraph [0052] - paragraph [0054] *<br>* paragraph [0063] - paragraph [0066] *<br>* paragraph [0073] - paragraph [0078] *<br>* examples 2-8 *<br>* claims 1, 6-9, 11 *<br>----- | 2,3,9,11<br><br>1,4-8, 10,12 | |
| | | | TECHNICAL FIELDS SEARCHED (IPC) |
| Y<br><br>A | EP 3 787 090 A1 (SK INNOVATION CO., LTD.) 3 March 2021 (2021-03-03)<br>* paragraph [0009] - paragraph [0010] *<br>* paragraph [0013] - paragraph [0016] *<br>* paragraph [0018] - paragraph [0022] *<br>* paragraph [0033] *<br>* paragraph [0037] *<br>* paragraph [0058] - paragraph [0062] *<br>* paragraph [0074] - paragraph [0075] *<br>* paragraph [0095] - paragraph [0098] *<br>* example 1 *<br>* comparative examples 6 & 7; examples 3-6; table 1 *<br>* claims 1-3, 6, 9, 11-14 *<br>----- | 5,9,11<br><br>1-4,6-8, 10,12 | H01M |

-/--

The present search report has been drawn up for all claims

1

| Place of search | Date of completion of the search | Examiner |
|---|---|---|
| Munich | 25 January 2023 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 19 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 758 123 A1 (SK INNOVATION CO., LTD.) 30 December 2020 (2020-12-30)<br>* paragraph [0019] - paragraph [0033] *<br>* paragraph [0037] *<br>* paragraph [0043] - paragraph [0048] *<br>* paragraph [0058] - paragraph [0059] *<br>* paragraph [0067] - paragraph [0075] *<br>* examples 1-6 *<br>* examples 7-12; table 1 *<br>* examples 13-18; table 2 *<br>* examples 19-29; table 3 *<br>* claims 1-7, 10-13 *<br>----- | 1-12 | |
| A | KR 2020 0104650 A (DONGWOO FINE CHEM CO., LTD.) 4 September 2020 (2020-09-04)<br>* abstract *<br>* examples 1, 2 *<br>* claims 1-6 *<br>----- | 1-12 | |
| A | CN 111 430 798 A (ZHUHAI COSMX BATTERY CO., LTD.) 17 July 2020 (2020-07-17)<br>* abstract *<br>* examples 1, 2, 5-10, 15-17 *<br>* claims 1-6, 10 *<br>----- | 1-12 | TECHNICAL FIELDS SEARCHED (IPC) |
| A | EP 3 557 679 A1 (SAMSUNG SDI CO., LTD.) 23 October 2019 (2019-10-23)<br>* paragraph [0007] - paragraph [0014] *<br>* paragraph [0019] *<br>* paragraph [0034] - paragraph [0043] *<br>* paragraph [0052] - paragraph [0053] *<br>* paragraph [0056] - paragraph [0059] *<br>* paragraph [0067] - paragraph [0072] *<br>* examples 2-4 *<br>* claims 1-9 *<br>----- | 1-12 | |

The present search report has been drawn up for all claims

1

| Place of search | Date of completion of the search | Examiner |
|---|---|---|
| Munich | 25 January 2023 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 19 3748

This annex lists the patent family members relating to the patent documents cited in the above-mentioned European search report. The members are as contained in the European Patent Office EDP file on The European Patent Office is in no way liable for these particulars which are merely given for the purpose of information.

25-01-2023

| Patent document cited in search report | | Publication date | Patent family member(s) | | | Publication date |
|---|---|---|---|---|---|---|
| US 2020251778 | A1 | 06-08-2020 | KR | 20190014622 | A | 13-02-2019 |
| | | | US | 2020251778 | A1 | 06-08-2020 |
| | | | WO | 2019027137 | A1 | 07-02-2019 |
| US 2020052337 | A1 | 13-02-2020 | NONE | | | |
| EP 3787090 | A1 | 03-03-2021 | CN | 112448012 | A | 05-03-2021 |
| | | | EP | 3787090 | A1 | 03-03-2021 |
| | | | KR | 20210025919 | A | 10-03-2021 |
| | | | US | 2021066743 | A1 | 04-03-2021 |
| EP 3758123 | A1 | 30-12-2020 | CN | 111788732 | A | 16-10-2020 |
| | | | EP | 3758123 | A1 | 30-12-2020 |
| | | | KR | 20190101876 | A | 02-09-2019 |
| | | | US | 2020388883 | A1 | 10-12-2020 |
| KR 20200104650 | A | 04-09-2020 | NONE | | | |
| CN 111430798 | A | 17-07-2020 | NONE | | | |
| EP 3557679 | A1 | 23-10-2019 | CN | 110391462 | A | 29-10-2019 |
| | | | EP | 3557679 | A1 | 23-10-2019 |
| | | | KR | 20190122024 | A | 29-10-2019 |
| | | | US | 2019326636 | A1 | 24-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210119981
- KR 102094263